# EUROPEAN PATENT APPLICATION

(11) **EP 1 457 889 A1**
(43) Date of publication of application: **15.09.2004**
(21) Application number: 03100639.8
(22) Date of filing: 13.03.2003
(51) Int. Cl.: G06F 17/30, G06F 17/60

(54) **Improved fingerprint matching method and system**

(71) Applicant: Koninklijke Philips Electronics N.V., 5621 BA Eindhoven (NL)
(72) Inventor: The designation of the inventor has not yet been filed
(74) Representative: Gravendeel, Cornelis

(57) **Abstract**

A method of obtaining data associated with a content item, comprising the steps of performing (33) a database lookup using an identifier for the content item to obtain the data and submitting (37) the content item for processing by a human (200) if the database lookup fails to obtain the data, characterized in that at least one of the steps is adjusted depending on a step (35) of classification of the content item into one of a number of classes. In one embodiment the database lookup is performed if (44) the content item was classified into one of a number of predetermined classes. In another embodiment the content item is submitted for processing by the human if (36) the database lookup fails to obtain the data and the content item was classified into one of a number of predetermined classes. Also a server (300) and a computer program product arranged to carry out the method.

## Description

The invention relates to a method of obtaining data associated with a content item, comprising the steps of performing a database lookup using an identifier for the content item to obtain the data and submitting the content item for processing by a human if the database lookup fails to obtain the data.

The invention further relates to a system for obtaining data associated with a content item, comprising means for performing a database lookup using an identifier for the content item to obtain the data and means for submitting the content item for processing by a human if the database lookup fails to obtain the data.

The invention further relates to a computer program product.

As more and more content is being made available, automatic broadcast monitoring, i.e. the automatic generation of playlists of radio or TV stations, becomes more and more important. Known techniques for automatic content identification are often based on watermarks or fingerprints. A watermark-based system extracts an identifier for a content item from the payload of a watermark embedded in the content item. A fingerprint-based system computes a representation of the most relevant perceptual features of the item and uses that as an identifier. Identifiers for a number of content items along with their associated data, such as the title, artist, genre and so on, are stored in a database. The data of a particular content item is retrieved by obtaining its identifier and performing a lookup or query in the database using the identifier as a lookup key or query parameter. The lookup then returns the data associated with the identifier.

Such systems automatically identify when songs, videoclips, movies or other content of which the identifier is in the database are being broadcast. However, no matter how large the database is, there always will be broadcast content of which the identifier is not in the database. For example a new released song of which the identifier has not been added to the database yet cannot be identified. Furthermore it is also not very cost effective to have an extremely large database, as the cost of the system grows linearly with the size of the database. Furthermore 98% of the songs broadcast by radio stations in one country are residing from only a small set of songs (typically 20.000 to 30.000).

Currently broadcast monitoring providers, assuming they want to identify every content item broadcast, have people listening to or watching all the content that was not identified. As this is a manual operation, the providers incur a large cost.

An application for audio fingerprinting is a service where a consumer can use his mobile phone to identify songs of which he does not know the title. For optimal consumer satisfaction it is critical that the probability that the fmgerprint of the song the consumer wants to identify is in the database. Therefore all phone calls to the fmgerprint service are recorded to audio files and for example once a week all (or a certain percentage) of these files are identified manually. This is done in order to optimize the contents of the fmgerprint database and therefore maximizing the probability that fingerprints of songs that consumers want to identify are present in the database. A similar application for video is also possible.

It is an object of the invention to provide a method according to the preamble which reduces the manual labor required with the prior art.

This object is achieved according to the invention by a method which is characterized in that at least one of the steps is adjusted depending on a step of classification of the content item into one of a number of classes. By combining automatic classification technologies with content identification technologies the costs of having to manually handle failed lookups in the a database is significantly reduced. The classification step allows an informed decision whether the database lookup and/or submitting the content item to a human would serve a useful purpose.

In an embodiment the method comprises performing the database lookup if the content item was classified into one of a number of predetermined classes. This way lookups that are guaranteed to fail are avoided. For example, if the content item is classified in the class 'music' a lookup in a database with music might be successful, but a content item classified as 'noise' will not be found.

In a further embodiment the method comprises submitting the content item for processing by the human if the database lookup fails to obtain the data and the content item was classified into one of a number of predetermined classes. For example in case of broadcast audio monitoring, a simple two-class classifier that discriminates between 'music' and 'non-music' can be used. In this case only the audio that was not identified by fingerprinting and classified as 'music' has to be identified manually. As a large percentage of non-identified audio consists of speech, a significant reduction in manual labor can be achieved.

This embodiment additionally provides an advantage in that the amount of data communicated to the human operators is minimized. All content that is not recognized by the server must be transmitted to terminals where the human operators can listen to or watch them. This means that a potentially large amount of audio or video content has to be transmitted to the operators. If the operators are located at a physically distant facility, the required bandwidth may be expensive. In accordance with the invention, content that is classified as unrecognizable does not need to be transmitted, which reduces the required bandwidth.

In a further embodiment the method comprises selecting the human to whom the content item is submitted for processing based on the class into which the content item was classified. A more sophisticated classifier, which can label non-identified content with a specific genre (pop, classical etc.) adds the extra possibility that non-identified content can be automatically distributed to the appropriate person with expertise in the respective genre.

In a further embodiment the method comprises obtaining the identifier by computing a fingerprint for the content item. A fingerprint of a content item, such as an audio or video clip, is a representation of the most relevant perceptual features of the item in question. Such fmgerprints are sometimes also known as "(robust) hashes".

In some configurations fingerprint computation is done at a location physically distant from the location where database lookups are performed. In such configurations fmgerprints are also computed for unrecognizable content such as speech or noise, or content that needs not to be identified such as commercial breaks or news. By applying a classifier to "weed out" such unrecognizable content the amount of fingerprints that needs to be transmitted to the database lookup component is reduced. This also reduces the amount of data to be transmitted.

In a further embodiment the method comprises obtaining the identifier by extracting the identifier from the payload of a watermark embedded in the content item. Watermark detection may require a substantial amount of processing, particularly in the case of video watermark detection. By classifying and ignoring content that does not contain a watermark the amount of processing required is reduced.

In a further embodiment the obtained data is recorded in a logfile. This way the logfile contains an accurate report of content items that were processed. This logfile can then serve as evidence of for example what was broadcasted over a particular channel.

It is another object of the invention to provide a system according to the preamble which reduces the manual labor required with the prior art.

This object is achieved according to the invention by a system which is characterized in that at least one of the means is adapted to operate in dependence on output of means for classification of the content item into one of a number of classes.

In an embodiment the means for submitting the content item for processing by the human are arranged to submit the content item conditional upon the means for performing a database lookup failing to obtain the data and the means for classification classifying the content item into one of a number of predetermined classes.

These and other aspects of the invention will be apparent from and elucidated with reference to the embodiments shown in the drawing, in which:
Fig. 1 schematically shows a system arranged for obtaining data associated with a content item using a fingerprint as an identifier;
Fig. 2 schematically shows a system arranged for obtaining data associated with a content item using an identifier extracted from the payload of a watermark;
Fig. 3 shows a flowchart illustrating an embodiment of the method according to the invention; and
Fig. 4 shows a flowchart illustrating another embodiment of the method according to the invention.

Throughout the figures, same reference numerals indicate similar or corresponding features. Some of the features indicated in the drawings are typically implemented in software, and as such represent software entities, such as software modules or objects.

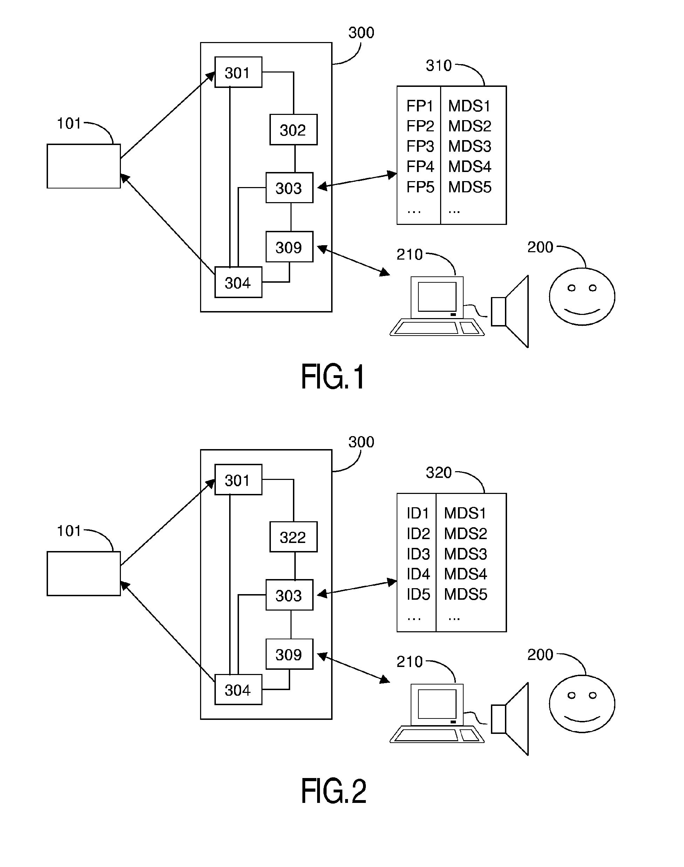

Fig. 1 schematically shows a client 101, a server 300 and a fmgerprint database 310. The client 101 can be an audio installation like a radio, or a source of video signals like a television receiver. It could also be a mobile phone. The client 101 usually obtains the content item it renders from another source. For example a radio would pick up a broadcast transmission from the air or from a cable connection and generate/render audible signals from that. A telephone can receive audio using its built-in microphone or video using its built-in camera.

For reasons of brevity the embodiment of Fig. 1 is discussed with reference to audio clips, although the invention could equally well work with video clips.

The server 300 here comprises an input module 301, a fingerprinting module 302, a Database Management System (DBMS) backend module 303, and a response module 304. It is the task of the server 300 to obtain data associated with the audio clip delivered to it by the client 101. Usually this data will be metadata such as title or artist of the audio clip, but it could also be data like a site on the Internet where one can purchase a product advertised in the audio clip.

The input module 301 receives an audio clip from the client 101. The audio clips is then fed to the fingerprinting module 302. The fingerprinting module 302 computes a fmgerprint from the received audio clip. One method for computing a robust fmgerprint is described in international patent application WO 02/065782 (attorney docket PHNL010110), although of course any method for computing a fingerprint can be used. The fingerprinting module 302 then supplies the computed fmgerprint as an identifier to the DBMS backend module 303.

The DBMS backend module 303 performs a query on the database 310 to retrieve a set of metadata associated with the received identifier from the database 310. As shown in Fig. 1, the database 310 comprises identifiers in the form of fmgerprints FP1, FP2, FP3, FP4 and FP5 and respective associated sets of metadata MDS1, MDS2, MDS3, MDS4 and MDS5. The above-mentioned international patent application WO 02/065782 also describes an efficient method of matching a fingerprint representing an unknown signal with a plurality of fmgerprints of identified signals stored in a database to identify the unknown signal.

The database 310 can be organized in various ways to optimize query time and/or data organization. The output of the fingerprinting module 302 should be taken into account when designing the tables in the database 310. In the embodiment shown in Fig. 1, the database 310 comprises a single table with entries (records) comprising respective fmgerprints and sets of metadata.

Another way to realize the database 310 is to set up several tables. A first table comprises a plurality of unique identifiers (primary keys) each associated with respective sets of metadata. Such tables can be obtained from various music identification sources. The combination of artist, title and year of release could be combined to form a unique identifier, although this is not guaranteed to be unique, so preferably a really globally unique value is used.

A second table is then set up with entries comprising for each content item the fmgerprints and the unique identifiers from the first table. This way, multiple fmgerprints can be associated with one set of metadata without having to duplicate the metadata. If multiple fmgerprints are possible for one content item, all these fingerprints are stored in the second table, all associated with the one unique identifier for that content item.

The DBMS backend module 303 then matches the received fingerprint against the fmgerprints in the second table, obtains an identifier and matches the identifier against the first table to obtain the metadata. If the database 310 is an SQL database, the two tables could be joined on the identifier. The DBMS backend module 303 feeds the results of the query to the response module 304, which transmits the metadata found back to the client 101.

If the client 101 is a mobile phone, the metadata could be transmitted e.g. as an SMS message or e-mail message. If the audio clip received by the input module 301 was sent by a mobile phone, then the telephone number can be obtained through Caller ID or Automatic Number Identification or similar means. The input module 301 then supplies the calling number to the response module 304, so that an SMS message can be sent to that same number.

Alternatively, the input module 301 could receive another means of identifying the user, such as a username or e-mail address supplied by the user when contacting the server 300. Registration could be required for using the service, and then the destination address can be obtained by checking the user's registration details e.g. on the basis of the username supplied by the user.

Yet alternatively the metadata found may be recorded in a logfile, preferably together with an identifier for the client 101 and a timestamp on which the entry was recorded. This logfile can be used by a copyright clearinghouse such as the American Society of Composers, Authors and Publishers (ASCAP) or the Dutch BUMA/Stemra to determine how many royalties should go to particular copyright holders. Such royalties are often based on an estimate of the number of times a particular song is broadcast, and this list provides an accurate estimate by an impartial third party. A broadcasting station could under- or overestimate the number of times it broadcast a particular content item, or could be unwilling to supply sufficient details.

Of course this list can also be valuable for many other purposes. If the content items being identified in this way comprise advertisements or promotional messages, then the list can be used to prove (or disprove) that a particular advertisement or message was broadcast at a certain time. This way a broadcasting station can show that it met its contractual obligations to an advertiser.

A further enhancement is described in international patent application serial number PCT/ IB03/00260 (attorney docket PHNL020101). According to this document, the server 300 should monitor one or more broadcast channels in addition to processing requests from the client 101. Metadata associated with the content on these channels should be copied into a secondary database. The secondary database then contains a small number of entries. Matching against the secondary database will thus be faster than matching against the first database. Only when no match is found in the secondary database is a match in the primary database performed. Because it is expected that many requests will arrive for content items transmitted over the monitored transmission channel(s), it follows that many requests can be answered using only the smaller and faster secondary database. So, on the average, the time needed to match a fingerprint is reduced.

Fig. 2 schematically shows a variation of the system of Fig. 1 in which the fingerprinting module 302 is replaced with a watermark extracting module 322. Clips received by the receiving module 301 are now passed to this watermark extracting module 301 which attempts to detect and extract watermarked data in the clip. The extracted data is then used as an identifier that can be passed to the DBMS backend module 303 for performing a database lookup to obtain metadata associated with that identifier.

As shown in Fig. 2, the database 320 comprises identifiers ID1, ID2, ID3, ID4 and ID5 and respective associated sets of metadata MDS1, MDS2, MDS3, MDS4 and MDS5. The rest of the operation of the server 300 is the same as discussed above with reference to Fig. 1.

In the server 300, whether operating using fingerprinting or watermarking technology or some other type of identification mechanism, it can happen that a particular identifier cannot be found in the database 310, 320. In such a case the content item in question may be submitted to a human operator 200 or manual recognition. In Fig. 1 and 2, this is represented by terminal 210 on which the content item can be played back, and the human operator 200 is expected to recognize the item and input or select the metadata. This metadata can then be supplied to the response module 304 so it can be sent back to the client 101 or recorded in the logfile, or used in some other way.

The invention is based on the insight that the server 300 would benefit from the use of automatic classification techniques for classifying the content item into one of a number of classes. If at least one of the steps described above is adjusted depending on a classification of the content item the operation of the server 300 will be improved.

To this end the server 300 is provided with automatic classifier 309. A number of automatic classification methods are discussed at the end of this specification. Typical systems for automatic classification consist of a feature extraction stage followed by a classification stage which maps the features to one or more classes of content.

The classifier 309 analyzes the content item and classifies the content item into one of a number of classes. The classification could be, for example, be as simple as 'music' and 'non-music' (e.g. 'speech' or 'noise') or 'movie' versus 'commercial break'. More detailed classifications are also available, such as genre classification, automatic detection of particular content highlights and automatic speaker recognition. Such classification methods allow classification of audio into classes such as 'classical', 'rock', 'speech', 'jazz', 'rap', etc., or classification of video into classes such as 'movie', 'commercial break', 'news' etc.

In accordance with one aspect of the invention, the content item is submitted for processing by the human if the database lookup fails to obtain the data and the content item was classified into one of a number of predetermined classes. For example in case of broadcast monitoring, a simple two-class classifier, which discriminates between 'music' and 'non-music', can be used. In this case only the audio that was not identified automatically and that is classified as 'music' needs to be identified manually. As a large percentage of non-identified audio consists of speech a significant reduction in manual labor can be achieved.

In a further embodiment the human to whom the content item is submitted for processing is selected based on the class into which the content item was classified. If a multiple class classifier is used one can also manage the contents of the fingerprint database on a higher level. A more sophisticated classifier, which can label non-identified music with a specific genre (pop, classical etc.) adds the extra possibility that non-identified audio can be automatically distributed to the appropriate person with expertise in the respective genre. For instance, if a large percentage of the content items submitted for manual identification are classified as jazz, more jazz music should be added to the database 310, 320.

In accordance with another aspect of the invention, the database lookup is performed if the content item was classified into one of a number of predetermined classes. For example, the database lookup could be performed only if the content item is classified as 'music' or 'advertisement' if the database 310, 320 contains only music or advertisements respectively. This way lookups that are guaranteed to fail are avoided.

In case of the mobile phone service, a significant percentage of all the recorded non-identified audio clips consist of only noise. This usually occurs when the mobile phone is too far from the audio source. When a two-class classifier is used, all the recordings that are classified as 'non-music' or 'noise' can be ignored. Therefore the human operator 200 only has to listen to and identify recordings classified as 'music'. Thus identification of non-identified audio clips can be done more efficiently.

However, in this embodiment it is important to choose a classification technology that has a very low false negative rate. That is, the number of items erroneously not classified into one of the predetermined classes should be very low. The inventors have found in practice that typical two-class classifiers may have a classification performance of about 90% for a short audio clip (5 to 10 seconds). This means that 10% of music is labeled as non-music. The overall performance of the combined classification/identification system would therefore drop below the 90%, which is clearly undesirable.

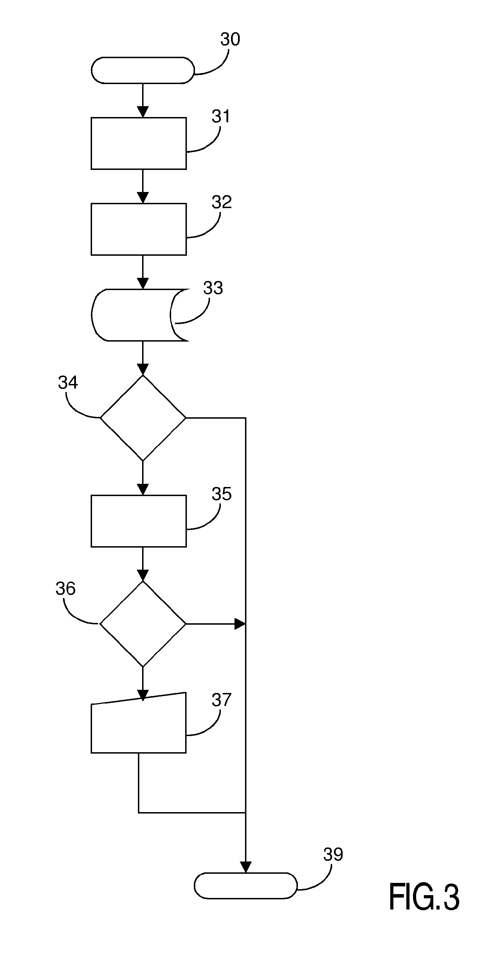

Fig. 3 shows a flowchart illustrating an embodiment of the method according to the invention. The method starts at step 30. In step 31 the content item, for example an audio or video clip, is received. At step 32, an identifier for the content item is obtained, for example by extracting the identifier from the payload of a watermark embedded in the content item, or by computing a fingerprint over the content item.

In step 33, a database lookup is performed to retrieve the data associated with the identifier. If in step 34 it is determined that the lookup failed, the method proceeds to step 35, otherwise in step 39 the method ends.

In step 35 the content item is classified into one of a number of classes, for example as either 'music' or 'noise'. A decision is then made in step 36 whether to submit the content item to the human operator 200 based on the classification. For example, if the content is classified as 'music' it is submitted to the operator 200.

If the decision is to submit the content item, then in step 37 the data is received which the operator 200 inputted or selected from a database. The method then also ends at step 39. If the content item does not have to be submitted, the method directly ends at step 39.

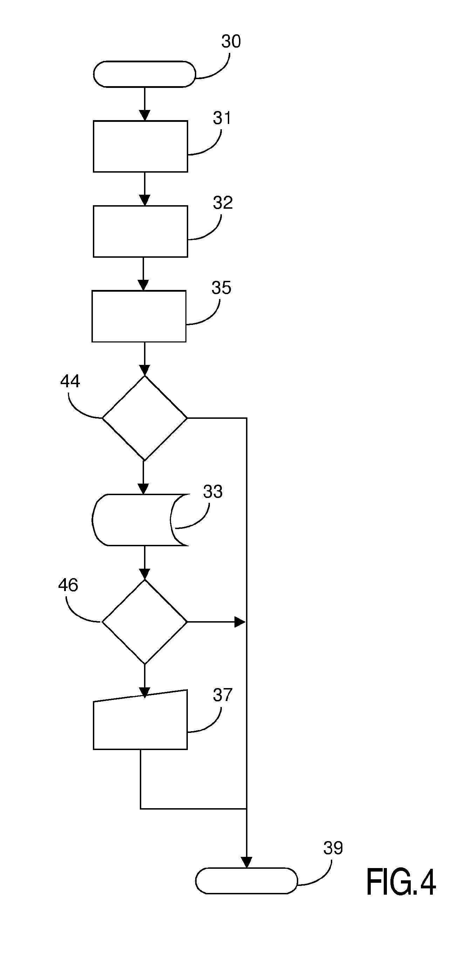

Fig. 4 shows a flowchart illustrating another embodiment of the method according to the invention. The steps identical to those from Fig. 3 are not repeated here.

A decision is made in step 44 whether to perform the database lookup to retrieve the data associated with the identifier, based on the classification obtained from step 35. For example, if the content item is classified as 'noise' the database lookup would not retrieve any matches and so can be skipped. If the database lookup is desired, the method proceeds to step 33 and otherwise ends at step 39.

If in step 46 it is determined that the lookup of step 33 failed, the method proceeds to step 37, otherwise in step 39 the method ends.

To enable a person skilled in the art to construct a server in accordance with the invention, some references to existing classification techniques are given below. It should be noted that the invention does not rely on one particular classification technology. The choice for which particular technology to use depends on the circumstances, for example whether a two-class or multiple-class classifier is necessary, whether one expects only 'music' and 'noise' to be provided to the server and so on.

Some two-class classification technologies are:
- E. Scheirer and M. Slaney. Construction and evaluation of a robust multifeature speech/music discriminator. *In Proc. ICASSP,* pages 1331-1334, Munich, Germany, 1997.
- G. Lu and T. Hankinson. A technique towards automatic audio classification and retrieval. In *4th int. conference on signal processing,* Beijing, 1998.
- R. Jarina, N. Murphy, N. O'connor, and S. Marlow. Speech-music discrimination from MPEG-1 bitstream. In *WSES International Conference on Speech, Signal and Image Processing,* Malta, 2001.

Some multiple-class classification technologies are:
- M. Zhang, K. Tan, and M. H. Er. Three-dimensional sound synthesis based on headrelated transfer functions. J. *Audio. Eng. Soc.,* 146:836-844, 1998.
- T. Zhang and C. C. J. Kuo. Audio content analysis for online audiovisual data segmentation and classification. *IEEE Transactions on speech and audio processing,* 9:441-457, 2001.
- J. Foote. A similarity measure for automatic audio classification. In *Proc. AAAI 1997 Spring Symposium on Intelligent Integration and Use of Text, Image, Video, and Audio Corpora,* 1997.
- M. S. Spina and V. W. Zue. Automatic transcription of general audio data: Effect of environment segmentation on phonetic recognition. In *Proceedings of Eurospeech,* Rhodes, Greece, 1997.
- G. Tzanetakis, G. Ess1, and P. Cook. Automatic musical genre classification of audio signals. In *Proceedings International Symposium for Audio Information Retrieval (ISMIR),* Princeton, NJ.
- D. Pye. Content-based methods for the management of digital music. In *ICASSP 2000,* Vol IV, pp 2437-2440, 2000.
- D. N. Jiang, H. J. Zhang, J. H. Tao, and L. H. Cai. Music type classification by spectral contrast feature. In *Proceedings of ICME: 2002 IEEE international conference on multimedia and expo,* Lausanne, Switzerland, 2002.

It should be noted that the above-mentioned embodiments illustrate rather than limit the invention, and that those skilled in the art will be able to design many alternative embodiments without departing from the scope of the appended claims.

For instance, a microphone connected to a personal computer could be used as the client 101. The computer then records sound from the microphone, and transmits the recording to the server 300 e.g. via the Internet as an e-mail message or using FTP, HTTP file upload or a similar mechanism. A portable device with recording means could also be used to make such a recording. The portable device can then be connected to the server via a phone line or network connection. Other transmission channels, such as Internet radio, allow the direct recording and transmission of a content item, since the item is then transmitted in a digital format.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements.

The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A method of obtaining data associated with a content item, comprising the steps of performing (33) a database lookup using an identifier for the content item to obtain the data and submitting (37) the content item for processing by a human (200) if the database lookup fails to obtain the data, **characterized in that** at least one of the steps is adjusted depending on a step (35) of classification of the content item into one of a number of classes.

2. The method of claim 1, comprising performing the database lookup if (44) the content item was classified into one of a number of predetermined classes.

3. The method of claim 1, comprising submitting (37) the content item for processing by the human if (36) the database lookup fails to obtain the data and the content item was classified into one of a number of predetermined classes.

4. The method of claim 1 or 3, comprising selecting the human to whom the content item is submitted for processing based on the class into which the content item was classified.

5. The method of claim 1, comprising obtaining the identifier by computing a fmgerprint for the content item.

6. The method of claim 1, comprising obtaining the identifier by extracting the identifier from the payload of a watermark embedded in the content item.

7. The method of claim 1, in which the obtained data is recorded in a logfile.

8. A system (300) for obtaining data associated with a content item, comprising means (303, 310) for performing a database lookup using an identifier for the content item to obtain the data and means (210) for submitting the content item for processing by a human (200) if the database lookup fails to obtain the data, **characterized in that** at least one of the means (303, 310; 210) is adapted to operate in dependence on output of means (309) for classification of the content item into one of a number of classes.

9. The system (300) of claim 8, in which the means (210) for submitting the content item for processing by the human are arranged to submit the content item conditional upon the means (303, 310) for performing a database lookup failing to obtain the data and the means (309) for classification classifying the content item into one of a number of predetermined classes.

10. A computer program product arranged for causing a processor to execute the method of claim 1.
